# EUROPEAN PATENT SPECIFICATION

(11) **EP 3 762 798 B1**
(45) Date of publication and mention of the grant of the patent: **03.05.2023**
(21) Application number: 18722197.3
(22) Date of filing: 05.03.2018
(51) Int. Cl.: G05D 1/02, B62D 15/02, B60W 30/00

(54) **METHOD, DEVICE AND PROGRAM FOR CONTROLLING MOVEMENT OF MOVING BODY AND STORAGE MEDIUM**
VERFAHREN, VORRICHTUNG UND PROGRAMM ZUR STEUERUNG DER BEWEGUNG EINES SICH BEWEGENDEN KÖRPERS UND SPEICHERMEDIUM
PROCÉDÉ, DISPOSITIF ET PROGRAMME DE COMMANDE DU MOUVEMENT D'UN CORPS MOBILE, ET SUPPORT DE STOCKAGE

(43) Date of publication of application: 13.01.2021
(73) Proprietor: Omron Corporation, Kyoto-shi, Kyoto 600-8530 (JP)
(72) Inventor: YANAGAWA, Yukiko, Kizugawa-shi, Kyoto 619-0283 (JP); IJIRI, Yoshihisa, Kizugawa-shi, Kyoto 619-0283 (JP)
(74) Representative: Becker, Eberhard
(86) International application number: PCT/IB2018/051389
(87) International publication number: WO 2019/171117

(56) References cited:
- EP-A1- 2 557 469
- WO-A1-2018/022409
- US-A1- 2008 167 819
- ZHANG FEIHU ET AL: "Vehicle detection based on LiDAR and camera fusion", 17TH INTERNATIONAL IEEE CONFERENCE ON INTELLIGENT TRANSPORTATION SYSTEMS (ITSC), IEEE, 8 October 2014 (2014-10-08), pages 1620-1625, XP032685578, DOI: 10.1109/ITSC.2014.6957925 [retrieved on 2014-11-14]
- LILI HUANG ET AL: "Tightly-coupled LIDAR and computer vision integration for vehicle detection", INTELLIGENT VEHICLES SYMPOSIUM, 2009 IEEE, IEEE, PISCATAWAY, NJ, USA, 3 June 2009 (2009-06-03), pages 604-609, XP031489909, ISBN: 978-1-4244-3503-6

## Description

### Technical Field

The present disclosure relates to the field of drive assist and more particularly, to a method, device and program for controlling movement of a moving body and a storage medium.

### Background

Along with rapid development of artificial intelligence, onboard software and networks, in drive assist, many functions considered to be impossible in the past become possible now, so that drive assist has attracted more and more people's attentions in recent years.

In patent document US 2008/167819 A1, a method for creating and managing a digital map for use by vehicles and including information relating to travel lanes on which the vehicles travel includes illuminating the environment outside of and around the vehicle with infrared illumination in an eye-safe part of the infrared spectrum as the vehicle is traveling on a travel lane to be mapped, forming, on the vehicle, at least one image from reflections from any objects in the path of the infrared illumination (such as by means of an image sensor), analyzing each image to obtain information about the object from which the infrared illumination has been reflected, and incorporating the information into the map if not already present therein. A driver of the vehicle may be alerted if the information obtained about an object in the environment outside of and around the vehicle indicates that a collision with the object is about to occur.

Development of drive assist may free humans from low-level, tedious and continuous drive operations. However, present drive assist still has various problems.

In a process of driving vehicle by means of self-driving in the drive assist, a vehicle-mounted sensor senses ambient data of a vehicle and transmits the data to a vehicle-mounted computer, and the vehicle-mounted computer analyzes and processes the data, thereby making a final decision. For example, under the condition of existence of an obstacle in a driving direction of the vehicle, acquired data about the obstacle is transmitted to the vehicle-mounted computer, and the vehicle-mounted computer learns about what the obstacle really is or parameters such as a size thereof by machine learning, thereby taking a corresponding measure according to these parameters. However, in such process, machine learning may take some time to obtain a determination result with certain reliability, and it is usually too late to take the corresponding measure after the determination result is obtained, so that an accident may happen. In addition, different road conditions may bring different processing variables for the vehicle-mounted computer, while machine learning may only ensure determination quality of a condition which has been learned, for example, under the condition of existence of an unknown obstacle in the driving direction of the vehicle, the vehicle-mounted computer is required to take more time to perform machine learning to reliably learn about what the obstacle really is or the parameters such as the size thereof when receiving data about the obstacle, or the obtained parameters are relatively poor in reliability, so that it is too late to take the measure.

For the above problem, there is yet no effective solution at present.

### Summary

### • The technical problem to be solved

The present disclosure provides a method, device and program for controlling movement of a moving body and a storage medium, so as to at least solve the technical problem that it is too late to take a measure due to the fact that the corresponding measure is taken to the moving body only after it is learned about what specific entity an object in an advancing direction of the moving body really is.

### • Means of solving the technical problem

According to an aspect of embodiments of the present disclosure, a method for controlling movement of a moving body is provided, which comprises: determining that at least one object exists in an advancing direction of the moving body based on a distance sensor to acquire a first determination result; executing first control on movement of the moving body on the basis of the first determination result, wherein executing first control on movement of the moving body on the basis of the first determination result comprises: controlling the moving body to be decelerated when the at least one object exists in an advancing direction of the moving body and when a speed of the moving body or a relative speed of the moving body and the at least one object exceeds a predetermined threshold value; and keeping the speed of the moving body unchanged when the at least one object exists in an advancing direction of the moving body and when the speed of the moving body or the relative speed of the moving body and the at least one object does not exceed the predetermined threshold value; determining predetermined parameters comprising at least one of a number, type, moving direction and moving speed of the at least one object according to a distance between the moving body and the at least one object acquired through the distance sensor and an image of the at least one object acquired through an image sensor to acquire a second determination result; and executing second control on movement of the moving body on the basis of the second determination result, wherein the predetermined threshold value depends on the distance between the moving body and the at least one object when the first determination result is acquired and a pre-estimation of the time taken to acquire the second determination result.

According to the aspect of the embodiments of the present disclosure, the at least one object in the advancing direction of the moving body is recognized in stages, and in a first stage, no detailed judgments about what the object is and the like are made, and when it is determined that the object exists in the advancing direction of the moving body, first control is performed on the moving body, for example, the moving body is decelerated. Therefore, time for the moving body to reach the at least one object is relatively prolonged, sufficient time is reserved for reliable determination of the predetermined parameters of the at least one object in a second stage, the condition that it is too late to adopt second control on the basis of the predetermined parameters of the at least one object is avoided, and running safety of the moving body is improved.

Wherein, under the condition that a distance between the moving body and the at least one object is less than or equal to a first distance, it is determined that the at least one object exists in the advancing direction of the moving body to acquire the first determination result; and under the condition that the distance between the moving body and the at least one object is less than or equal to a second distance, the predetermined parameters of the at least one object are determined to acquire the second determination result, wherein the first distance is longer than the second distance.

Since the first determination result that the at least one object exists in the advancing direction of the moving body is obtained when the moving body is at a position relatively far away from the at least one object, a certain measure may be taken to the moving body when the distance between the moving body and the object is relatively long, a distance margin is provided for reliable acquisition of the second determination result, and the running safety of the moving body is improved.

Wherein, time for determining that the at least one object exists in the advancing direction of the moving body to acquire the first determination result is first time; and time for determining the predetermined parameters of the at least one object to acquire the second determination result is second time, wherein the first time is shorter than the second time.

The time for determining that the object exists in the advancing direction of the moving body is shorter than the time for determining the predetermined parameter of the object, so that a time margin is provided for reliable acquisition of the second determination result, and the running safety of the moving body is improved.

Wherein, determining that the at least one object exists in the advancing direction of the moving body to acquire the first determination result comprises: acquiring the first determination result on the basis of optical measurement or on the basis of a first machine learning model; and determining the predetermined parameter of the at least one object to acquire the second determination result comprises: acquiring the distance between the moving body and the at least one object through the distance sensor; acquiring an image of the at least one object through the image sensor; inputting the image of the at least one object and the distance between the moving body and the at least one object to a second machine learning model; and acquiring the second determination result on the basis of the second machine learning model.

Time for acquiring the first determination result on the basis of optical measurement is usually shorter than time for acquiring the first determination result on the basis of the machine learning model, so that the time margin is further provided for acquisition of the second determination result. In addition, acquisition of the first determination result is only determination of whether the object exists in the advancing direction of the moving body or not, judgment accuracy is relatively low, and an operation amount is relatively small when the machine learning model is utilized for judgment, so that the time for acquiring the first determination result is relatively short.

Wherein, acquiring the first determination result on the basis of optical measurement comprises: acquiring the distance between the moving body and the at least one object through the distance sensor, and determining that the at least one object exists in the advancing direction of the moving body on the basis of the distance that is acquired through the distance sensor.

The distance sensor is an example of a device for acquiring the first determination result on the basis of optical measurement, and it may acquire the result at a high speed with a small calculating amount, so that the time margin is provided for acquisition of the second determination result.

Wherein acquiring the second determination result on the basis of the second machine learning model further comprising: processing the image to acquire at least one of the number, type, moving direction and moving speed of the at least one object through the second machine learning model.

The number, type, moving direction, moving speed and the like of the object may be accurately recognized in detail to acquire a more accurate result by virtue of the machine learning model, so that second control on the moving body is more accurate.

Wherein acquiring the second determination result on the basis of the second machine learning model comprises: acquiring the distance between the moving body and the at least one object through the distance sensor; acquiring the image of the at least one object through the image sensor; and processing part of the image and the distance to acquire at least one of the number, type, moving direction and moving speed of the at least one object through the second machine learning model.

At least one of the number, type, moving direction and moving speed of the at least one object is acquired by virtue of part of the image of the object and the distance between the moving body and the object, so that an operation amount for machine learning may be reduced, and Central Processing Unit (CPU) resources of a system may be saved.

When it is determined that the at least one object exists in the advancing direction of the moving body, the moving body is controlled to be decelerated, so that the time for the moving body to reach the at least one object is relatively prolonged, sufficient time is reserved for reliable determination of the predetermined parameters of the at least one object, the condition that it is too late to adopt second control on the basis of the predetermined parameters of the at least one object is avoided, and the running safety of the moving body is improved.

Wherein, the method further comprises: acquiring a speed of the moving body.

On the basis of the first determination result, control is further executed on the moving body on the basis of the speed of the moving body or the relative speed of the moving body and the object, so that unnecessary influence of deceleration of the moving body under the condition that there is sufficient time for acquiring the second determination result when the speed of the moving body is very low or the relative speed of the moving body and the object is relatively low on the driving speed of the moving body is avoided.

Wherein, executing the second control on movement of the moving body on the basis of the second determination result comprises one or more of the following operations: controlling the moving body to be stopped; controlling the moving body to be decelerated; controlling the moving body to bypass; controlling the moving body to cross the at least one object; and controlling the moving body to keep the current speed.

Performing different control on the moving body according to at least one of the number, type, moving direction, moving direction and the like of the object not only may improve the running safety of the moving body, but also may improve riding comfort of a user, for example, under the condition that the moving body is an intelligent automobile.

Wherein, the method further comprises: acquiring a position of the at least one object, and executing second control on movement of the moving body further on the basis of the position.

Performing second control on the moving body in combination with the position of the object may further improve accuracy of second control and avoid a new accident caused by second control on the moving body.

According to another embodiment of the present disclosure, a device for movement of a moving body is provided, which includes: a first determination unit configured to determine that at least one object exists in an advancing direction of the moving body based on a sensor to acquire a first determination result; a first control unit configured to execute control on movement of the moving body on the basis of the first determination result, wherein the first control unit is configured to control the moving body to be decelerated when the at least one object exists in an advancing direction of the moving body and when a speed of the moving body or a relative speed of the moving body and the at least one object exceeds a predetermined threshold value, wherein the first control unit (504) is configured to keep the speed of the moving body unchanged when the at least one object exists in an advancing direction of the moving body and when the speed of the moving body or the relative speed of the moving body and the at least one object does not exceed the predetermined threshold value; a second determination unit configured to determine predetermined parameters comprising at least one of a number, type, moving direction and moving speed of the at least one object according to a distance between the moving body and the at least one object acquired through the distance sensor and an image of the at least one object acquired through an image sensor to acquire a second determination result; and a second control unit configured to execute control on movement of the moving body on the basis of the second determination result, wherein the predetermined threshold value depends on the distance between the moving body and the at least one object when the first determination result is acquired and a pre-estimation of the time taken to acquire the second determination result.

Wherein, under the condition that a distance between the moving body and the at least one object is less than or equal to a first distance, the first determination unit determines that the at least one object exists in the advancing direction of the moving body to acquire the first determination result; and under the condition that the distance between the moving body and the at least one object is less than or equal to a second distance, the second determination unit determines the predetermined parameters of the at least one object to acquire the second determination result, wherein the first distance is longer than the second distance.

Wherein, time for the first determination unit to determine that the at least one object exists in the advancing direction of the moving body to acquire the first determination result is first time; and time for the second determination unit to determine the predetermined parameters of the at least one object to acquire the second determination result is second time, wherein the first time is shorter than the second time.

Wherein, the first determination unit is configured to acquire the first determination result on the basis of optical measurement or on the basis of a first machine learning model; and the second determination unit is configured to acquire the distance between the moving body and the at least one object through the distance sensor, acquire an image of the at least one object through the image sensor, input the image of the at least one object and the distance between the moving body and the at least one object to a second machine learning model, and acquire the second determination result on the basis of the second machine learning model.

Wherein, the first determination unit is further configured to: acquire the distance between the moving body and the at least one object through a distance sensor, and determine that the at least one object exists in the advancing direction of the moving body on the basis of the distance that is acquired through the distance sensor.

Wherein the second determination unit is further configured to: process the image to acquire at least one of the number, type, moving direction and moving speed of the at least one object through the second machine learning model.

Wherein the second determination unit is further configured to: process part of the image and the distance to acquire at least one of the number, type, moving direction and moving speed of the at least one object through the second machine learning model.

Wherein, the device further includes an acquisition unit, and the acquisition unit is configured to acquire a speed of the moving body.

Wherein, the second control unit is configured to execute one or more of the following operations on movement of the moving body on the basis of the second determination result: controlling the moving body to be stopped; controlling the moving body to be decelerated; controlling the moving body to bypass; controlling the moving body to cross the at least one object; and controlling the moving body to keep the current speed.

Wherein, the device further includes an acquisition unit, the acquisition unit is configured to acquire a position of the at least one object, and the second control unit is configured to execute control on movement of the moving body on the basis of the position.

According to another embodiment of the present disclosure, a program for controlling movement of a moving body is provided, when executed, the program causes the method according to an embodiment of the present disclosure to be performed.

According to another embodiment of the present disclosure, a storage medium is provided, on which a program is stored, when executed, the program causes the method according to an embodiment of the present disclosure to be performed.

### • Technical effect

In the present disclosure, a manner of controlling movement of the moving body in stages is adopted, the technical problem that it is too late to take a measure due to the fact that the corresponding measure is taken to the moving body only after it is learned about what specific entity the object in the advancing direction of the moving body is may be solved, and the running safety of the moving body is improved.

### Brief Description of the Drawings

The drawings described herein are used to provide a further understanding of the present disclosure and constitute a part of the present application. The schematic embodiments of the present disclosure and the descriptions thereof are used to explain the present disclosure, and do not constitute improper limitations to the present disclosure. In the drawings:
Fig. 1 is a mode diagram of a hardware structure of an information processing system according to an embodiment of the present disclosure;
Fig. 2 is a flowchart of a method for controlling movement of a moving body according to an embodiment of the present disclosure;
Fig. 3 is a flowchart of operation of an ADAS to which a method for controlling movement of a moving body is applied according to another embodiment of the present disclosure;
Fig. 4 is a flowchart of operation of an ADAS to which a method for controlling movement of a moving body is applied according to another embodiment of the present disclosure; and
Fig. 5 is a structure diagram of a device for controlling movement of a moving body according to an embodiment of the present disclosure.

### Detailed Description of the Embodiments

In sequence to make those skilled in the art better understand the present disclosure, the implementation modes of the present disclosure are clearly and completely described below in combination with the accompanying drawings of the present disclosure. Apparently, the described implementation modes are merely a part of the implementation modes of the present disclosure, rather than all of the implementation modes. All other implementation modes obtained by those skilled in the art based on the implementation modes in the present disclosure, without creative efforts, shall fall within the protection scope of the present disclosure.

For solving the technical problem that it is too late to take a measure due to the fact that the corresponding measure is taken to a moving body only after it is learned about what specific entity an object in an advancing direction of the moving body is, the present disclosure controls movement of the moving body in stages, thereby improving running safety of the moving body.

Specifically, according to the present disclosure, whether at least one object exists in an advancing direction of the moving body or not is determined by virtue of a sensor or a machine learning model at first, and when the at least one object exists in the advancing direction of the moving body, movement of the moving body is immediately controlled, for example, the moving body is controlled to be decelerated. Under a normal condition, if the at least one object exists in the advancing direction of the moving body, the sensor or the machine learning model may be utilized for determination when a distance between the moving body and the object is relatively long, and time for determination is very short.

Then, when the moving body gets close to the at least one object, predetermined parameters of the at least one object, for example, a number, type, advancing direction and moving speed of the object, are determined by virtue of the machine learning model,. Compared with determination of existence of the object, determination of the predetermined parameter of the object is higher in accuracy and requires longer time to be taken, and at this moment, the distance between the moving body and the object is relatively closer. Corresponding measure(s) is (are) taken to control the movement of the moving body , for example, stopping the moving body, decelerating the moving body, causing the moving body to bypass, causing the moving body to cross the at least one object and keeping the moving body at a current speed, according to the determined predetermined parameter of the at least one object.

According to the present disclosure, since the object is found when the distance between the moving body and the object is relatively long and the moving speed of the moving body is controlled when the object is found, for example, the moving body is controlled to be decelerated, time for the moving body to move to the object is relatively prolonged, relatively abundant time is provided for judgment about the predetermined parameters of the number, type, moving direction, moving speed and the like of the moving body, corresponding control may further be taken to movement of the moving body timely, and the running safety of the moving body is improved.

In addition, when it is determined that the at least one object exists in the advancing direction of the moving body, the current driving speed of the moving body may be detected through the sensor, and if the current driving speed of the moving body is higher than a predetermined speed, the moving body is controlled to be decelerated to reduce its speed to be lower than the predetermined speed. If the current driving speed of the moving body is less than or equal to the predetermined speed, the current speed of the moving body is kept unchanged. Therefore, not only is ensured a time margin for determination of the number, type, moving direction, moving speed and the like of the object, but also unnecessary influence on the driving speed of the moving body is avoided.

Controlling movement of the moving body on the basis of a position of the at least one object may further improve the running safety of the moving body. For example, if a size of the object is relatively large, the moving body may be controlled to bypass the object, and if the position of the object is not considered, the moving body may bypass the object from a left side or right side of the object. There is made such a hypothesis that the object is at a position close to a cliff in a mountain road, for example, the left side of the object is the cliff, the right side is a mountain and a distance between an edge of the cliff and the object is smaller than a maximum width of the moving body. Considering the position of the object, the moving body may be controlled to bypass the object from the right side of the object. Therefore, the risk that the moving body falls off the cliff when bypassing the object from the left side of the object is avoided, and the running safety of the moving body is further improved.

At first, a hardware structure of an information processing system 100 according to an implementation mode of the present disclosure is described.

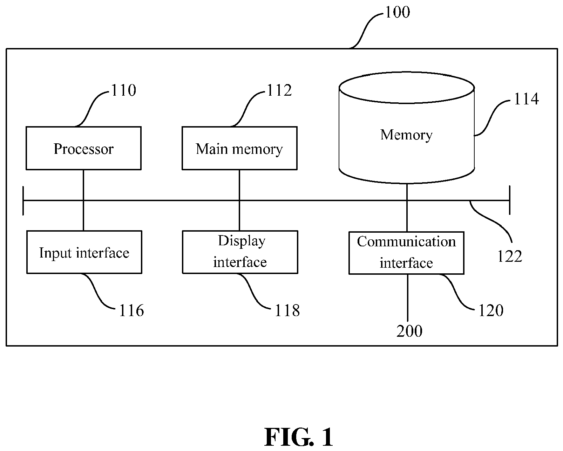

Fig. 1 is a mode diagram of a hardware structure of an information processing system according to an embodiment of the present disclosure. As shown in Fig. 1, for example, the information processing system 100 may be implemented by a universal computer of a universal computer architecture. The information processing system 100 may include a processor 110, a main memory 112, a memory 114, an input interface 116, a display interface 118 and a communication interface 120. These parts may, for example, communicate with one another through an internal bus 122.

The processor 110 loads a program stored in the memory 114 into the main memory 112 for executing, thereby realizing functions and processing described hereinafter. The main memory 112 may be structured to be a nonvolatile memory, and plays a role as a working memory required by program execution of the processor 110.

The input interface 116 may be connected with an input portion such as a mouse and a keyboard, and receives an instruction input by operating the input portion by an operator.

The display interface 118 may be connected with a display, and may output various processing results generated by program execution of the processor 110 to the display.

The communication interface 120 is configured to communicate with a Programmable Logic Controller (PLC), a sensor, a database device and the like through a network 200.

The memory 114 may store a program capable of making a computer to function as the information processing system 100, for example, an information processing program and an Operating System (OS).

The information processing program stored in the memory 114 may be installed in the information processing system 100 through an optical recording medium such as a Digital Versatile Disc (DVD) or a semiconductor recording medium such as a Universal Serial Bus (USB) memory. Or, the information processing program may also be downloaded from a server device and the like on the network.

The information processing program according to the implementation mode may also be provided in a manner of combination with other program. Under such a condition, the information processing program does not include a module included in the other program of such a combination, but cooperates with the other program for processing. Therefore, the information processing program according to the implementation mode may also be in a form of combination with the other program.

Fig. 1 shows an example of implementing the information processing system 100 by virtue of a universal computer. However, the present invention is not limited, and all or part of functions thereof may be realized through a dedicated circuit, for example, an Application Specific Integrated Circuit (ASIC) or a Field-Programmable Gate Array (FPGA). In addition, part of processing of the information processing system 100 may also be implemented on an external device connected with the network.

### Embodiment 1

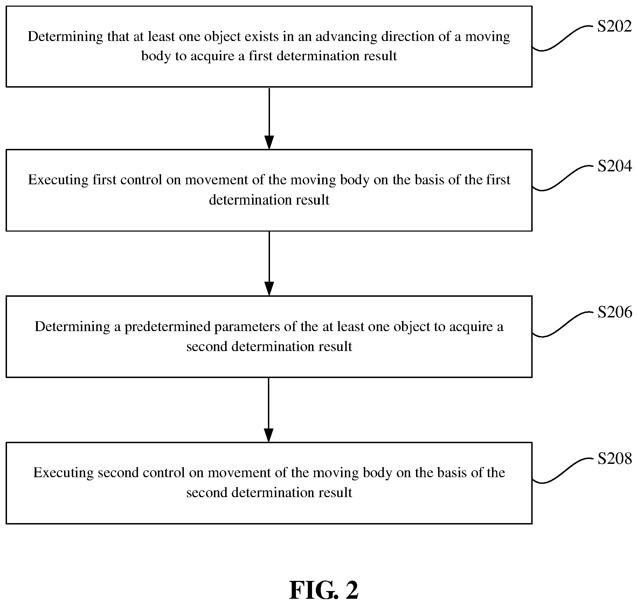

Fig. 2 is a flowchart of a method for controlling movement of a moving body according to an embodiment of the present disclosure. As shown in Fig. 2, the method includes the following steps.

In Step S202, it is determined that at least one object exists in an advancing direction of a moving body to acquire a first determination result.

In the present disclosure, the moving body refers to a movable object of which a speed, more preferably, the speed and advancing direction, may be controlled. A typical example of the moving body may be an intelligent automobile, and may also be a robot, a mechanical arm and the like.

The at least one object may include any living or lifeless entity, for example, a person or cat walking on a road , or a stone and traffic sign on the road.

The advancing direction of the moving body may be a direction in which the moving body moves forwards, and may also be a direction in which the moving body moves back.

The first determination result may be acquired on the basis of optical measurement or on the basis of a machine learning model. For example, a distance between the moving body and the at least one object is acquired through a distance sensor, and whether the at least one object exists in the advancing direction of the moving body or not is determined according to the distance. Specifically, the distance sensor may be, but not limited to, a LIDAR and the like. Determining whether the object exits in the advancing direction of the moving body or not through the LIDAR is a content well known in the field, and will not be elaborated herein.

The machine learning model receives input data which is input. The input data is data configured to be input into the machine learning model obtained by machine training to determine output data. Here, the machine learning model is a model obtained by performing machine training in advance, and various algorithms of the machine learning model implement matching with known training data with specific functions, thereby achieving purposes of training and testing. The machine learning model for determining whether one or more objects exist in the advancing direction of the moving body or not may be trained by adopting a training method in a related technology. How to train the machine learning model is not the key point of the present disclosure, and thus will not be elaborated herein.

In Step S204, first control is executed on movement of the moving body on the basis of the first determination result.

According to a specific condition, first control may include controlling the moving body to be decelerated or controlling the moving body to keep a current speed unchanged.

For example, when it is determined that the at least one object exists in the advancing direction of the moving body, for safety, the moving body may be controlled to be decelerated.

Or, when it is determined that the at least one object exists in the advancing direction of the moving body, if the current speed of the moving body or a relative speed of the moving body and the at least one object is higher than a predetermined threshold value, the moving body is controlled to be decelerated to reduce its speed to be lower than a predetermined speed. In addition, if the current speed of the moving body or the relative speed of the moving body and the at least one object does not exceed the predetermined threshold value, the current speed of the moving body is kept unchanged.

Here, the predetermined threshold value refers to a speed just capable of ensuring that a proper measure may be taken before the moving body contacts with the object when the moving body moves at the speed equal to the predetermined threshold value, and the predetermined threshold value depends on the distance between the moving body and the object when the first determination result is acquired and time costed by acquiring the second determination result.

In Step S206, predetermined parameters of the at least one object are determined to acquire a second determination result.

The predetermined parameters may include, but not limited to, a number, type, moving direction, moving speed, position and the like of the at least one object.

The predetermined parameters such as the number, type, moving direction, moving speed, position of the at least one object may be acquired on the basis of a machine learning model. For example, for the condition that the type of the at least one object is acquired through the machine learning model, the machine learning model may be trained for several predetermined types, for example, a person, a stone and a small animal, image data, acquired through an image sensor, of the object is input into the trained machine learning model, and the type of the object may be determined according to probabilities, output by the machine learning model, that the object belongs to each type. When the type of the object is determined by virtue of the machine learning model on the basis of the image data of the object, it may also be determined on the basis of part of the image data only.

Determination of the other predetermined parameters of the at least one object may be implemented in a similar manner through the machine learning model on the basis of the image data acquired by the image sensor or on the basis of part of the image data acquired by the image sensor and the distance, acquired by the distance sensor, between the moving body and the at least one object.

Acquisition of the second determination result is specific judgment about which entity the object is, a requirement on judgment accuracy is higher, more time is taken, and the distance with the object may be required to achieve a certain extent to obtain a high-accuracy result.

Therefore, it may be understood that the distance between the moving body and the object when the first determination result that the at least one object exists in the advancing direction of the moving body is acquired is longer than that between the moving body and the object when the second determination result is acquired.

In addition, since acquisition of the first determination result is only judgment about existence or absence of the object in the advancing direction of the moving body, the judgment accuracy is relatively lower, the sensor may be utilized for fast judgment, and the machine learning model may also be utilized for judgment. Since the judgment accuracy when the first determination result is acquired is relatively low, an operation amount is relatively small when the machine learning model is utilized for judgment, and the time for acquiring the first determination result is relatively short.

Compared with time for acquiring the second determination result, the time for acquiring the first determination result is much shorter. Under the condition that both of the results are acquired by adopting the machine learning models, the operation amount of the machine learning model acquiring the first determination result is much smaller than the operation amount of the machine learning model acquiring the second determination result.

In Step S208, second control is executed on movement of the moving body on the basis of the second determination result.

According to the number, type, moving direction, moving speed, position and the like, determined in Step S206, of the moving body, one or more of the following operations may be performed on the moving body: for example, stopping the moving body, decelerating the moving body, causing the moving body to bypass, causing the moving body to cross the object and keeping the current speed of the moving body.

For example, if it is determined that the object is a large stone, the moving body is controlled to bypass the stone or be stopped, and if it is determined that the moving direction of the object is the same as the moving body and the moving speed is higher than the speed of the moving body, the moving body is controlled to keep the current speed unchanged.

Second control on the moving body is different according to the parameters such as the number, type, moving direction, moving speed, position and the like of the moving body.

According to the present disclosure, a manner of controlling movement of the moving body in stages is adopted, movement of the moving body is correspondingly controlled when the distance between the moving body and the object is relatively long, the time margin is provided for accurately judging what entity the moving body is, and the running safety of the moving body is ensured.

Specific implementation modes of the present disclosure are introduced below in combination with application of the present disclosure to the aspect of an intelligent drive automobile in detail, but the present disclosure is not limited thereto.

As an example, control on an automobile installed with a driver assistance system of automatic drive and the like is considered. It is important to note that "automatic drive" mentioned herein not only refers to fully automatic drive in a narrow sense but also includes low-level automatic drive of Adaptive Cruise Control (ACC) and the like. An example of the driver assistance system of the embodiment is an ADAS in the automobile. It at least includes the following parts: a distance sensor module, for example, but not limited to, a LIDAR; a speed sensor module; a camera module; an object recognition device; and a drive control device, for example, a brake and a steering wheel. In addition, it may further be provided with a loudspeaker, a display and the like.

### Embodiment 2

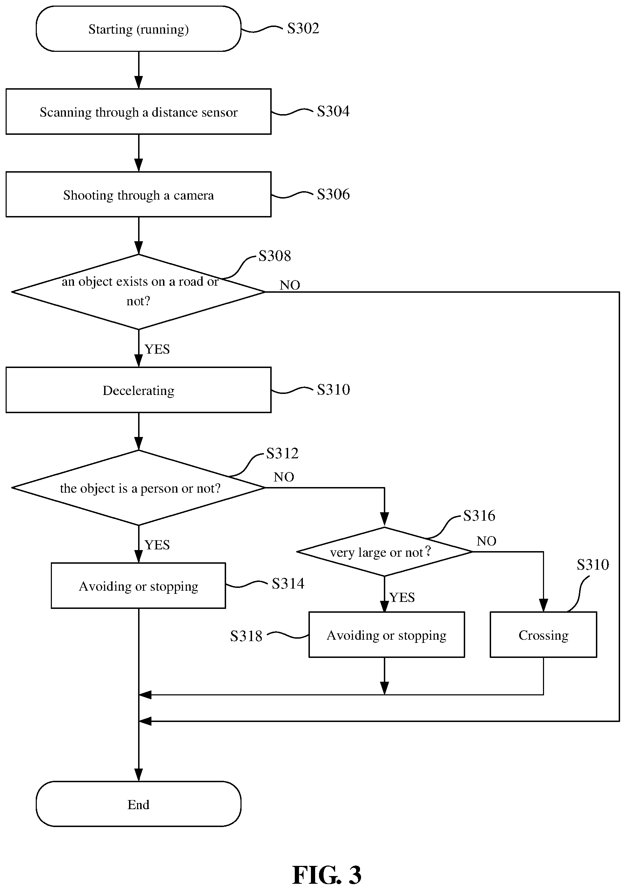

Fig. 3 is a flowchart of operation of an ADAS to which a method for controlling movement of a moving body is applied according to another embodiment of the invention.

The flow starts with Step S302 that an automobile equipped with an ADAS runs on a road.

In Step S304, a surrounding of the automobile is scanned, particularly in an advancing direction of the automobile, to acquire a scanning result of the surrounding of the automobile through a distance sensor module, for example, a LIDAR, of the ADAS.

In Step S306, the surrounding of the automobile, particularly an environment in the advancing direction of the automobile, is shot to acquire image data of the surrounding of the automobile, particularly the environment in the advancing direction of the automobile, through a camera module of the ADAS. Optionally, a distance sensor such as the LIDAR may be adopted to sense the surrounding of the automobile, particularly the environment in the advancing direction of the automobile, instead of the camera module.

In Step S308, whether an object exists in the advancing direction of the automobile or not is judged according to the scanning result acquired by the distance sensor module in Step S304. Here, the object includes any living or lifeless entity, for example, a person, a stone or a traffic sign. Optionally, whether the object exists in the advancing direction of the automobile or not may also be judged by adopting a trained machine learning model.

If it is determined in Step S308 that no object exists in the advancing direction of the automobile, no processing is performed on movement of the automobile, and the flow is ended.

If it is determined in Step S308 that the object exists in the advancing direction of the automobile, Step S310 of the flow is executed.

In Step S310, the automobile is controlled to be decelerated through a drive control device of the ADAS, for example, a brake.

In Step S312, the image data acquired in Step S306 is input into the trained machine learning model to judge whether an acquired image represents a specific object, for example, a person, or not.

If it is judged in Step S312 that the image acquired in Step S306 represents a specific object, for example, a person, Step S314 is executed.

In Step S314, the automobile is controlled through the drive control device of the ADAS to stop the automobile or avoid the automobile from the person before contacting with the person. For example, if a lane may be changed, a steering wheel of the automobile is controlled to change the lane for the automobile, thereby avoiding the person. Or, a distance between the automobile and the person is estimated, the brake of the automobile is controlled on the basis of the estimated distance to stop the automobile before contacting with the person. Then, the flow is ended.

If it is judged in Step S312 that the image acquired in Step S306 is, for example, a stone rather than a specific object (for example, a person), Step S316 of the flow is executed.

In Step S316, a size of the stone is calculated on the basis of the scanning result acquired in Step S304 and the image data acquired in Step S306, and whether the size is larger than a specified size or not is judged. Here, the specified size refers to a maximum size of an object the automobile may cross under the condition that performance of the automobile is not damaged and running safety of the automobile is maintained.

If it is determined in Step S316 that the size of the stone is larger than the specified size, Step S318 of the flow is executed.

In Step S318, the automobile is controlled through the drive control device of the ADAS to stop the automobile or avoid the automobile from the stone before contacting with the stone. For example, if the lane may be changed, the steering wheel of the automobile is controlled to change the lane for the automobile, thereby avoiding the stone. Or, a distance between the automobile and the stone is estimated, and the brake of the automobile is controlled on the basis of the estimated distance to stop the automobile before contacting with the stone. Then, the flow is ended.

If it is determined in Step S316 that the size of the stone is smaller than the specified size, Step S310 of the flow is executed.

In Step S310, the automobile is controlled to cross the stone through the drive control device of the ADAS. Then, the flow is ended.

### Embodiment 3

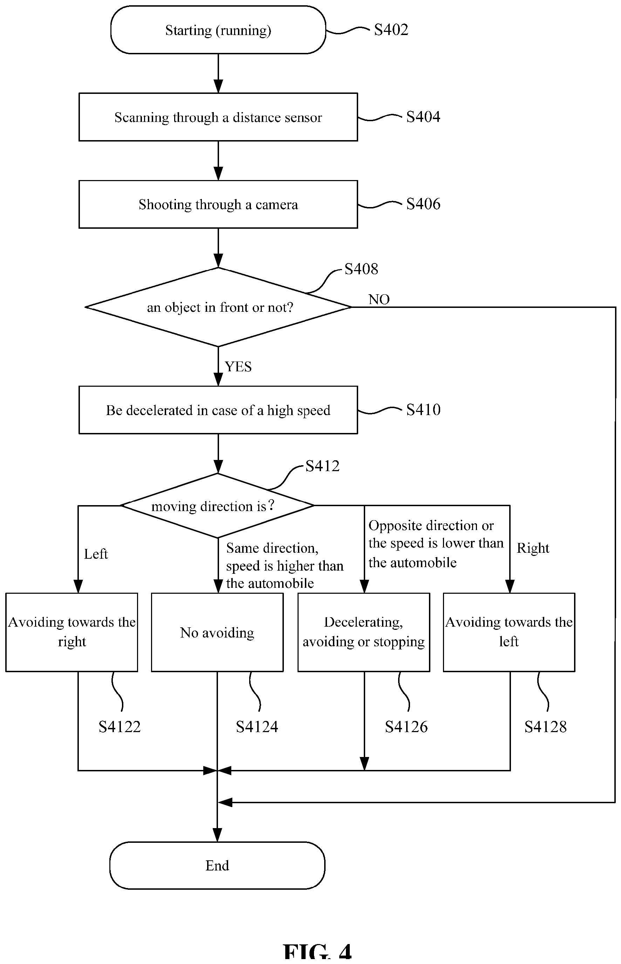

Fig. 4 is a flowchart of operation of an ADAS to which a method for controlling movement of a moving body is applied according to another embodiment of the invention.

The flow starts with Step S402 that an automobile equipped with an ADAS runs on a road.

In Step S404, a surrounding of the automobile is scanned, particularly in an advancing direction of the automobile, to acquire a scanning result of the surrounding of the automobile through a distance sensor module, for example, a LIDAR, of the ADAS.

In Step S406, the surrounding of the automobile, particularly an environment in the advancing direction of the automobile, is shot to acquire image data of the surrounding of the automobile, particularly the environment in the advancing direction of the automobile, through a camera module of the ADAS. Optionally, a distance sensor such as the LIDAR may be adopted to sense the surrounding of the automobile, particularly the environment in the advancing direction of the automobile, instead of the camera module.

In Step S408, whether an object exists in the advancing direction of the automobile or not is judged according to the scanning result acquired by the distance sensor module in Step S404. Here, the object includes any living or lifeless entity, for example, a person, a stone or a traffic sign. Optionally, whether the object exists in the advancing direction of the automobile or not may also be judged by adopting a trained machine learning model.

If it is determined in Step S408 that no object exists in the advancing direction of the automobile, the flow is ended.

If it is determined in Step S408 that the object exists in the advancing direction of the automobile, Step S410 of the flow is executed.

In Step S410, a current speed of the automobile is acquired through a speed sensor module of the ADAS, and whether the current speed of the automobile is higher than a predetermined speed or not is determined. Here, the predetermined speed refers to a speed just capable of ensuring that a proper measure may be taken before the automobile contacts with the object when the automobile runs at the speed, the predetermined speed depends on a distance between the automobile and the object when Step S408 is executed and time taken by executing Step S410 to Step S412, and the time may be obtained by pre-estimation.

In Step S410, if it is determined that the current speed of the automobile is higher than the predetermined speed, the automobile is controlled to be decelerated to reduce the speed of the automobile to be lower than the predetermined speed through a drive control device of the ADAS, for example, a brake. If it is determined that the current speed of the automobile is less than or equal to the predetermined speed, the current speed of the automobile is kept, and the flow is ended.

After Step S410, in Step S412, a moving direction of the object (for example, another automobile A) is further judged. The image data acquired in Step S406 may be input into the trained machine learning model, and the moving direction of the object is judged according to an output result of the machine learning model.

If the other automobile A moves towards a left side of the road, a steering wheel of the automobile is controlled to make the automobile avoid towards a right side of the other automobile A in Step S4122. Then, the flow is ended.

If running directions of the other automobile A and the automobile are same and a running speed of the other automobile A is higher than the speed of the automobile, no processing is performed on movement of the automobile in Step S4124, and the flow is ended.

If the running directions of the other automobile A and the automobile are opposite or the running speed of the other automobile A is lower than the speed of the automobile and the automobile and the other automobile A get close to each other, in Step S4126, the automobile is controlled to be decelerated or stopped before contacting with the other automobile A through the drive control device of the ADAS, for example, the brake, or a lane is changed through the drive control device of the automobile, for example, the steering wheel, thereby avoiding the other automobile A. Then, the flow is ended.

If the other automobile A moves towards a right side of the road, the steering wheel of the automobile is controlled to make the automobile avoid towards a left side of the other automobile A in Step S4128. Then, the flow is ended.

### Embodiment 4

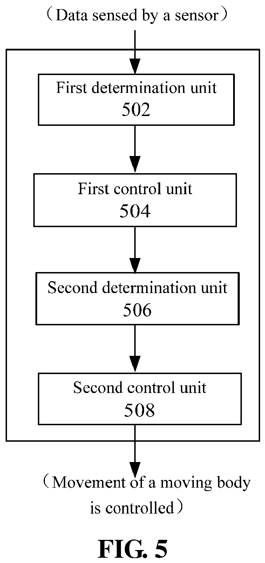

The methods in embodiment 1 to embodiment 3 may be applied to a hardware environment shown in Fig. 5, wherein the hardware environment includes a network environment.

Fig. 5 is a structure diagram of a device for controlling movement of a moving body according to an embodiment of the present disclosure. The device includes a first determination unit 502, a first control unit 504, a second determination unit 506 and a second control unit 508, wherein the first determination unit 502 is configured to determine that at least one object exists in an advancing direction of a moving body to acquire a first determination result; the first control unit 504 is configured to execute control on movement of the moving body on the basis of the first determination result; the second determination unit 506 is configured to determine a predetermined parameters of the at least one object to acquire a second determination result; and the second control unit 508 is configured to execute control on movement of the moving body on the basis of the second determination result.

The program stored in the memory 114 can be loaded into the main memory 112 by means of the processor 110 shown in figure 1 so as to execute the program, thereby achieving the functions of the described first determination unit 502, first control unit 504, second determination unit and second control unit 508.

According to the embodiment of the present disclosure, a program for controlling movement of a moving body is further provided, which executed, the program causes the flow described in any one of embodiments 1-3 to be performed.

According to the embodiment of the present disclosure, a storage medium is further provided, on which a program is stored, when executed, the program causes the flow described in any one of embodiments 1-3 to be performed.

### Modified Example 1

In Step S312 of embodiment 2, only an example of judging whether the object is a person or not is shown, but the present disclosure is not limited thereto. For example, the specific type the object belonging to with a highest probability in several predetermined types (for example, a person, a stone and a small animal) may also be judged through the trained machine learning model, and then the automobile is correspondingly controlled according to the type of the object.

For example, if it is determined in Step S312 that a probability that the object is a stone is highest, the automobile is controlled to directly cross the stone by the subsequent step under the condition that the size of the stone is smaller than the specified size. If it is determined in Step S312 that a probability that the object is a small animal is highest, the automobile may not be controlled to directly cross the small animal even though a size of the small animal is smaller than the specified size, and instead, the automobile is controlled to be stopped or bypassed.

In Step S312, if it is obtained through the machine learning model that all probabilities that the object belongs to the several predetermined types are lower than a predetermined threshold value, it is indicated that the object does not belong to any type in the several predetermined types, and for safety, the automobile may be stopped in the subsequent step.

### Modified Example 2

In embodiment 3, an example of controlling movement of the automobile on the basis of the moving direction and moving speed of the object when an object exists in the advancing direction of the automobile is described, but the present disclosure is not limited thereto.

More than one object may exist in the advancing direction of the automobile, for example, a walking person, a stone and a small animal, and after types to which these objects belong are recognized through the machine learning model, the specific objects which should be avoided or to which attentions should be paid are determined in the subsequent step. For example, in an example where the more than one object are a walking person, a stone and a small animal, the person and the small animal should be avoided or attentions should be paid to them, a stone of which a size is relatively small may be directly crossed, and under the condition that the automobile may not bypass a stone of which a size is relatively large at the same time of avoiding the person and the small animal, the automobile is controlled to be stopped.

### Modified Example 3

As a modification, in embodiment 3, a position of the object may further be determined on the basis of output (the scanning result) of the distance module in Step S404 before Step S412, and in the subsequent step, movement of the automobile is correspondingly controlled further on the basis of the position of the object.

For example, if the other automobile A moves towards the left side of the road, but the right side of the road is a cliff and a distance between a position of the other automobile A and the right side of the road is smaller than a maximum bandwidth of the moving body, it is necessary to control the automobile to be stopped to avoid the risk of falling off the cliff.

Although the method, device and program for controlling movement of the moving body and storage medium of the present disclosure are described with specific examples where an intelligent automobile is used as the moving body in the present disclosure, the present disclosure is not limited thereto, and the method, device, program for controlling movement of the moving body and storage medium of the present disclosure may also be applied to control of a robot, a mechanical arm and the like. For example, when a mechanical arm is adopted to place a workpiece on a production line, the staged control manner of the present disclosure may be adopted to control placement of the workpiece.

If being implemented in the form of a software functional unit and sold or used as an independent product, the device for controlling movement of the moving body or part of it may be stored in a computer-readable storage medium. Based on this understanding, the technical solutions of the present disclosure essentially, or the part contributing to the prior art, or all or part of the technical solutions may be implemented in the form of a software product, and the computer software product is stored in a storage medium, including several instructions for causing a piece of computer equipment (which may be a personal computer, a server or network equipment) to execute all or part of the steps of the method according to each example of the present disclosure. The foregoing storage medium includes various media capable of storing program codes such as a USB memory, a Read-Only Memory (ROM), a Random Access Memory (RAM), a removable hard disk, a magnetic disk, or an optical disk, and moreover, may further include a data stream downloaded from a server or a cloud.

### Reference signs in the accompanying drawings

100: Information processing system
110: Processor
112: Main memory
114: Memory
116: Input interface
118: Display interface
120: Communication interface
122: Internal bus
200: network
502: First determination unit
504: First control unit
506: Second determination unit
508: Second control unit.

## Claims

1. A method for controlling movement of a moving body, comprising:
determining that at least one object exists in an advancing direction of the moving body based on a distance sensor to acquire a first determination result;
executing first control on movement of the moving body on the basis of the first determination result, wherein executing first control on movement of the moving body on the basis of the first determination result comprises:
controlling the moving body to be decelerated when the at least one object exists in an advancing direction of the moving body and when a speed of the moving body or a relative speed of the moving body and the at least one object exceeds a predetermined threshold value; and
keeping the speed of the moving body unchanged when the at least one object exists in an advancing direction of the moving body and when the speed of the moving body or the relative speed of the moving body and the at least one object does not exceed the predetermined threshold value;
determining predetermined parameters comprising at least one of a number, type, moving direction and moving speed of the at least one object according to a distance between the moving body and the at least one object acquired through the distance sensor and an image of the at least one object acquired through an image sensor to acquire a second determination result; and
executing second control on movement of the moving body on the basis of the second determination result,
wherein the predetermined threshold value depends on the distance between the moving body and the at least one object when the first determination result is acquired and a pre-estimation of the time taken to acquire the second determination result.

2. The method of claim 1, wherein,
under the condition that a distance between the moving body and the at least one object is less than or equal to a first distance, it is determined that the at least one object exists in the advancing direction of the moving body to acquire the first determination result; and
under the condition that the distance between the moving body and the at least one object is less than or equal to a second distance, the predetermined parameters of the at least one object are determined to acquire the second determination result, wherein the first distance is longer than the second distance.

3. The method of claim 1 or 2, wherein
time for determining that the at least one object exists in the advancing direction of the moving body to acquire the first determination result is first time; and
time for determining the predetermined parameters of the at least one object to acquire the second determination result is second time,
wherein the first time is shorter than the second time.

4. The method of claim 1, wherein
determining that the at least one object exists in the advancing direction of the moving body to acquire the first determination result comprises: acquiring the first determination result on the basis of optical measurement or on the basis of a first machine learning model; and
determining the predetermined parameters of the at least one object to acquire the second determination result comprises:
acquiring the distance between the moving body and the at least one object through the distance sensor;
acquiring an image of the at least one object through the image sensor;
inputting the image of the at least one object and the distance between the moving body and the at least one object to a second machine learning model; and
acquiring the second determination result on the basis of the second machine learning model.

5. The method of claim 4, wherein
acquiring the first determination result on the basis of optical measurement comprises: acquiring the distance between the moving body and the at least one object through the distance sensor, and determining that the at least one object exists in the advancing direction of the moving body on the basis of the distance that is acquired through the distance sensor.

6. The method of claim 4, wherein
acquiring the second determination result on the basis of the second machine learning model further comprises: processing the image to acquire at least one of the number, type, moving direction and moving speed of the at least one object through the second machine learning model.

7. The method of claim 4 or 5, wherein
acquiring the second determination result on the basis of the second machine learning model comprises:
processing part of the image and the distance to acquire at least one of the number, type, moving direction and moving speed of the at least one object through the second machine learning model.

8. The method of claim 1, wherein
the method further comprises: acquiring a speed of the moving body.

9. The method of claim 1, wherein
the method further comprises: acquiring a position of the at least one object, and executing second control on movement of the moving body further on the basis of the position.

10. A device for controlling movement of a moving body, comprising:
a first determination unit (502) configured to determine that at least one object exists in an advancing direction of the moving body based on a sensor to acquire a first determination result;
a first control unit (504) configured to execute control on movement of the moving body on the basis of the first determination result,
wherein the first control unit (504) is configured to control the moving body to be decelerated when the at least one object exists in an advancing direction of the moving body and when a speed of the moving body or a relative speed of the moving body and the at least one object exceeds a predetermined threshold value,
wherein the first control unit (504) is configured to keep the speed of the moving body unchanged when the at least one object exists in an advancing direction of the moving body and when the speed of the moving body or the relative speed of the moving body and the at least one object does not exceed the predetermined threshold value;
a second determination unit (506) configured to determine predetermined parameters comprising at least one of a number, type, moving direction and moving speed of the at least one object according to a distance between the moving body and the at least one object acquired through the distance sensor and an image of the at least one object acquired through an image sensor to acquire a second determination result; and
a second control unit (508) configured to execute control on movement of the moving body on the basis of the second determination result,
wherein the predetermined threshold value depends on the distance between the moving body and the at least one object when the first determination result is acquired and a pre-estimation of the time taken to acquire the second determination result.

11. The device of claim 10, wherein,
under the condition that a distance between the moving body and the at least one object is less than or equal to a first distance, the first determination unit (502) determines that the at least one object exists in the advancing direction of the moving body to acquire the first determination result; and
under the condition that the distance between the moving body and the at least one object is less than or equal to a second distance, the second determination unit (504) determines the predetermined parameters of the at least one object to acquire the second determination result,
wherein the first distance is longer than the second distance.

12. The device of claim 10 or 11, wherein
time for the first determination unit (502) to determine that the at least one object exists in the advancing direction of the moving body to acquire the first determination result is first time; and
time for the second determination unit (504) to determine the predetermined parameters of the at least one object to acquire the second determination result is second time,
wherein the first time is shorter than the second time.

13. The device of claim 10, wherein
the first determination unit (502) is configured to acquire the first determination result on the basis of optical measurement or on the basis of a first machine learning model; and
the second determination unit (504) is configured to acquire the distance between the moving body and the at least one object through the distance sensor, acquire an image of the at least one object through the image sensor, input the image of the at least one object and the distance between the moving body and the at least one object to a second machine learning model, and acquire the second determination result on the basis of the second machine learning model.

14. The device of claim 13, wherein
the first determination unit (502) is further configured to: acquire the distance between the moving body and the at least one object through a distance sensor, and determine that the at least one object exists in the advancing direction of the moving body on the basis of the distance that is acquired through the distance sensor.

15. The device of claim 13, wherein
the second determination unit (504) is further configured to: process the image to acquire at least one of the number, type, moving direction and moving speed of the at least one object through the second machine learning model.

16. The device of claim 13 or 14, wherein
the second determination unit (504) is further configured to:
process part of the image and the distance to acquire at least one of the number, type, moving direction and moving speed of the at least one object through the second machine learning model.

17. The device of claim 10, wherein
the device further comprises an acquisition unit, and the acquisition unit is configured to acquire a speed of the moving body.

18. The device of claim 10, wherein
the device further comprises an acquisition unit, the acquisition unit is configured to acquire a position of the at least one object, and
the second control unit (508) is configured to execute control on movement of the moving body on the basis of the position.

19. A program for controlling movement of a moving body, when executed, the program causes the method of any one of claims 1-9 to be performed.

20. A storage medium, on which a program is stored, when executed, the program causes the method of any one of claims 1-9 to be performed.

## Patentansprüche

1. Verfahren zur Steuerung von Bewegung eines bewegten Körpers, umfassend:
Bestimmen, dass wenigstens ein Objekt in einer Fortbewegungsrichtung des bewegten Körpers vorhanden ist, auf der Grundlage eines Abstandssensors, um ein erstes Bestimmungsergebnis zu erfassen;
Ausführen erster Bewegungssteuerung des bewegten Körpers auf der Grundlage des ersten Bestimmungsergebnisses, wobei Ausführen der ersten Bewegungssteuerung des bewegten Körpers auf der Grundlage des ersten Bestimmungsergebnisses umfasst:
Steuern des bewegten Körpers, um abgebremst zu werden, wenn das wenigstens eine Objekt in einer Fortbewegungsrichtung des bewegten Körpers vorhanden ist und wenn eine Geschwindigkeit des bewegten Körpers oder eine relative Geschwindigkeit des bewegten Körpers und des wenigstens einen Objekts einen vorbestimmten Schwellenwert überschreitet; und
Beibehalten der Geschwindigkeit des bewegten Körpers, wenn das wenigstens eine Objekt in einer Fortbewegungsrichtung des bewegten Körpers vorhanden ist und wenn die Geschwindigkeit des bewegten Körpers oder die relative Geschwindigkeit des bewegten Körpers und des wenigstens einen Objekts den vorbestimmten Schwellenwert nicht überschreitet;
Bestimmen vorbestimmter Parameter, umfassend wenigstens eines von einer Anzahl, einem Typ, einer Bewegungsrichtung und einer Bewegungsgeschwindigkeit des wenigstens einen Objekts gemäß einem Abstand zwischen dem bewegten Körper und dem wenigstens einen Objekt, Erfassen durch den Abstandssensor, und einem Bild des wenigstens einen Objekts, Erfassen durch einen Bildsensor, um ein zweites Bestimmungsergebnis zu erfassen; und
Ausführen von zweiter Bewegungssteuerung des bewegten Körpers auf der Grundlage des zweiten Bestimmungsergebnisses,
wobei der vorbestimmte Schwellenwert von dem Abstand zwischen dem bewegten Körper und dem wenigstens einen Objekt abhängt, wenn das erste Bestimmungsergebnis erfasst wird, und von einer Vorabschätzung der Zeit, die gebraucht wird, um das zweite Bestimmungsergebnis zu erfassen.

2. Verfahren nach Anspruch 1, wobei,
unter der Bedingung, dass ein Abstand zwischen dem bewegten Körper und dem wenigstens einen Objekt kleiner oder gleich einem ersten Abstand ist, bestimmt wird, dass das wenigstens eine Objekt in der Fortbewegungsrichtung des bewegten Körpers vorhanden ist, um das erste Bestimmungsergebnis zu erfassen; und
unter der Bedingung, dass der Abstand zwischen dem bewegten Körper und dem wenigstens einen Objekt kleiner oder gleich einem zweiten Abstand ist, die vorbestimmten Parameter des wenigstens einen Objekts bestimmt werden, um das zweite Bestimmungsergebnis zu erfassen, wobei der erste Abstand größer als der zweite Abstand ist.

3. Verfahren nach Anspruch 1 oder 2, wobei
Zeit zum Bestimmen, dass das wenigstens eine Objekt in der Fortbewegungsrichtung des bewegten Körpers vorhanden ist, um das erste Bestimmungsergebnis zu erfassen, erste Zeit ist; und
Zeit zum Bestimmen der vorbestimmten Parameter des wenigstens einen Objekts zum Erfassen des zweiten Bestimmungsergebnisses, zweite Zeit ist,
wobei die erste Zeit kürzer ist als die zweite Zeit.

4. Verfahren nach Anspruch 1, wobei
Bestimmen, dass das wenigstens eine Objekt in der Fortbewegungsrichtung des bewegten Körpers vorhanden ist, um das erste Bestimmungsergebnis zu erfassen, umfasst:
Erfassen des ersten Bestimmungsergebnisses auf der Grundlage einer optischen Messung oder auf der Grundlage eines ersten maschinellen Lernmodells; und
Bestimmen der vorbestimmten Parameter des wenigstens einen Objekts, um das zweite Bestimmungsergebnis zu erfassen, umfasst:
Erfassen des Abstands zwischen dem bewegten Körper und dem wenigstens einen Objekt durch den Abstandssensor;
Erfassen eines Bildes des wenigstens einen Objekts durch den Bildsensor;
Eingeben des Bildes des wenigstens einen Objekts und des Abstands zwischen dem bewegten Körper und dem wenigstens einen Objekt in ein zweites maschinelles Lernmodell; und
Erfassen des zweiten Bestimmungsergebnisses auf der Grundlage des zweiten maschinellen Lernmodells.

5. Verfahren nach Anspruch 4, wobei
Erfassen des ersten Bestimmungsergebnisses auf der Grundlage der optischen Messung umfasst: Erfassen des Abstands zwischen dem bewegten Körper und dem wenigstens einen Objekt durch den Abstandssensor, und Bestimmen, dass das wenigstens eine Objekt in der Fortbewegungsrichtung des bewegten Körpers vorhanden ist, auf der Grundlage des Abstands, der durch den Abstandssensor erfasst wird.

6. Verfahren nach Anspruch 4, wobei
Erfassen des zweiten Bestimmungsergebnisses auf der Grundlage des zweiten maschinellen Lernmodells ferner umfasst: Verarbeiten des Bildes, um wenigstens eines von Anzahl, Typ, Fortbewegungsrichtung und Bewegungsgeschwindigkeit des wenigstens einen Objekts durch das zweite maschinelle Lernmodell zu erfassen.

7. Verfahren nach Anspruch 4 oder 5, wobei
Erfassen des zweiten Bestimmungsergebnisses auf der Grundlage des zweiten maschinellen Lernmodells umfasst:
Verarbeiten eines Teils des Bildes und des Abstands, um wenigstens eines von Anzahl, Typ, Fortbewegungsrichtung und Bewegungsgeschwindigkeit des wenigstens einen Objekts durch das zweite maschinelle Lernmodell zu erfassen.

8. Verfahren nach Anspruch 1, wobei
das Verfahren ferner umfasst: Erfassen einer Geschwindigkeit des bewegten Körpers.

9. Verfahren nach Anspruch 1, wobei
das Verfahren ferner umfasst: Erfassen einer Position des wenigstens einen Objekts, und Ausführen zweiter Bewegungssteuerung des bewegten Körpers weiter auf der Grundlage der Position.

10. Vorrichtung zur Steuerung von Bewegung eines bewegten Körpers, umfassend:
eine erste Bestimmungseinheit (502), die so konfiguriert ist, dass sie bestimmt, dass wenigstens ein Objekt in einer Fortbewegungsrichtung des bewegten Körpers vorhanden ist, auf der Grundlage eines Sensors, um ein erstes Bestimmungsergebnis zu erfassen;
eine erste Steuereinheit (504), die so konfiguriert ist, dass sie Bewegungssteuerung des bewegten Körpers auf der Grundlage des ersten Bestimmungsergebnisses ausführt,
wobei die erste Steuereinheit (504) so konfiguriert ist, dass sie den bewegten Körper so steuert, dass er abgebremst wird, wenn das wenigstens eine Objekt in einer Fortbewegungsrichtung des bewegten Körpers vorhanden ist und wenn eine Geschwindigkeit des bewegten Körpers oder eine relative Geschwindigkeit des bewegten Körpers und des wenigstens einen Objekts einen vorbestimmten Schwellenwert überschreitet,
wobei die erste Steuereinheit (504) so konfiguriert ist, dass sie die Geschwindigkeit des bewegten Körpers beibehält, wenn das wenigstens eine Objekt in einer Fortbewegungsrichtung des bewegten Körpers vorhanden ist und wenn die Geschwindigkeit des bewegten Körpers oder die relative Geschwindigkeit des bewegten Körpers und des wenigstens einen Objekts den vorbestimmten Schwellenwert nicht überschreitet;
eine zweite Bestimmungseinheit (506), die so konfiguriert ist, dass sie vorbestimmte Parameter bestimmt, umfassend wenigstens eines von einer Anzahl, einem Typ, einer Fortbewegungsrichtung und einer Bewegungsgeschwindigkeit des wenigstens einen Objekts gemäß einem Abstand zwischen dem bewegten Körper und dem wenigstens einen Objekt, erfasst durch den Abstandssensor, und einem Bild des wenigstens einen Objekts, erfasst durch einen Bildsensor, um ein zweites Bestimmungsergebnis zu erfassen; und
eine zweite Steuereinheit (508), die so konfiguriert ist, dass sie Bewegungssteuerung des bewegten Körpers auf der Grundlage des zweiten Bestimmungsergebnisses ausführt, wobei der vorbestimmte Schwellenwert von dem Abstand zwischen dem bewegten Körper und dem wenigstens einen Objekt, wenn das erste Bestimmungsergebnis erfasst wird, und einer Vorabschätzung der Zeit, die gebraucht wird, um das zweite Bestimmungsergebnis zu erfassen, abhängt.

11. Vorrichtung nach Anspruch 10, wobei,
unter der Bedingung, dass ein Abstand zwischen dem bewegten Körper und dem wenigstens einen Objekt kleiner oder gleich einem ersten Abstand ist, die erste Bestimmungseinheit (502) bestimmt, dass das wenigstens eine Objekt in der Fortbewegungsrichtung des bewegten Körpers vorhanden ist, um das erste Bestimmungsergebnis zu erfassen; und
unter der Bedingung, dass der Abstand zwischen dem bewegten Körper und dem wenigstens einen Objekt kleiner oder gleich einem zweiten Abstand ist, die zweite Bestimmungseinheit (504) die vorbestimmten Parameter des wenigstens einen Objekts bestimmt, um das zweite Bestimmungsergebnis zu erfassen,
wobei der erste Abstand größer als der zweite Abstand ist.

12. Vorrichtung nach Anspruch 10 oder 11, wobei
Zeit für die erste Bestimmungseinheit (502), um zu bestimmen, dass das wenigstens eine Objekt in der Fortbewegungsrichtung des bewegten Körpers vorhanden ist, um das erste Bestimmungsergebnis zu erfassen, erste Zeit ist; und
Zeit für die zweite Bestimmungseinheit (504), um die vorbestimmten Parameter des wenigstens einen Objekts zu bestimmen, um das zweite Bestimmungsergebnis zu erfassen, zweite Zeit ist,
wobei die erste Zeit kürzer als die zweite Zeit ist.

13. Vorrichtung nach Anspruch 10, wobei
die erste Bestimmungseinheit (502) so konfiguriert ist, dass sie das erste Bestimmungsergebnis auf der Grundlage von optischer Messung oder auf der Grundlage von einem erstem maschinellen Lernmodell erfasst; und
die zweite Bestimmungseinheit (504) so konfiguriert ist, dass sie den Abstand zwischen dem bewegten Körper und dem wenigstens einen Objekt durch den Abstandssensor erfasst, ein Bild des wenigstens einen Objekts durch den Bildsensor erfasst, das Bild des wenigstens einen Objekts und den Abstand zwischen dem bewegten Körper und dem wenigstens einen Objekt in ein zweites maschinelles Lernmodell eingibt und das zweite Bestimmungsergebnis auf der Grundlage des zweiten maschinellen Lernmodells erfasst.

14. Vorrichtung nach Anspruch 13, wobei
die erste Bestimmungseinheit (502) ferner so konfiguriert ist, dass sie: den Abstand zwischen dem bewegten Körper und dem wenigstens einen Objekt durch einen Abstandssensor erfasst, und
Bestimmt, dass das wenigstens eine Objekt in der Fortbewegungsrichtung des bewegten Körpers vorhanden ist, auf der Grundlage des Abstands, der durch den Abstandssensor erfasst wird.

15. Vorrichtung nach Anspruch 13, wobei
die zweite Bestimmungseinheit (504) ferner so konfiguriert ist, dass sie: das Bild verarbeitet, um wenigstens eines von der Anzahl, dem Typ, der Fortbewegungsrichtung und der Bewegungsgeschwindigkeit des wenigstens einen Objekts durch das zweite maschinelle Lernmodell zu erfassen.

16. Vorrichtung nach Anspruch 13 oder 14, wobei
die zweite Bestimmungseinheit (504) ferner so konfiguriert ist, dass sie:
Teil des Bildes und die Entfernung verarbeitet, um wenigstens eines von der Anzahl, dem Typ, der Fortbewegungsrichtung und der Bewegungsgeschwindigkeit des wenigstens einen Objekts durch das zweite maschinelle Lernmodell zu erfassen.

17. Vorrichtung nach Anspruch 10, wobei
die Vorrichtung ferner eine Erfassungseinheit umfasst, und die Erfassungseinheit so konfiguriert ist, dass sie eine Geschwindigkeit des bewegten Körpers erfasst.

18. Vorrichtung nach Anspruch 10, wobei
die Vorrichtung ferner eine Erfassungseinheit umfasst, wobei die Erfassungseinheit so konfiguriert ist, dass sie eine Position des wenigstens einen Objekts erfasst, und
die zweite Steuereinheit (508) so konfiguriert ist, dass sie eine Bewegungssteuerung des bewegten Körpers auf der Grundlage der Position ausführt.

19. Programm zur Bewegungssteuerung eines bewegten Körpers, wobei das Programm, wenn es ausgeführt wird, die Durchführung des Verfahrens nach einem der Ansprüche 1 bis 9 bewirkt.

20. Speichermedium, auf dem ein Programm gespeichert ist, das, wenn es ausgeführt wird, die Durchführung des Verfahrens nach einem der Ansprüche 1 bis 9 bewirkt.

## Revendications

1. Procédé de commande de déplacement d'un corps mobile, comprenant :
la détermination qu'au moins un objet existe dans une direction d'avancée du corps mobile sur la base d'un capteur de distance pour acquérir un premier résultat de détermination ;
l'exécution d'une première commande de déplacement du corps mobile sur la base du premier résultat de détermination, dans lequel l'exécution de la première commande de déplacement du corps mobile sur la base du premier résultat de détermination comprend :
la commande d'une décélération du corps mobile lorsque l'au moins un objet existe dans une direction d'avancée du corps mobile et lorsqu'une vitesse du corps mobile ou une vitesse relative du corps mobile et de l'au moins un objet dépasse une valeur de seuil prédéterminée ; et
le maintien de la vitesse du corps mobile inchangée lorsque l'au moins un objet existe dans une direction d'avancée du corps mobile et lorsque la vitesse du corps mobile ou la vitesse relative du corps mobile et de l'au moins un objet ne dépasse pas la valeur de seuil prédéterminée ;
la détermination de paramètres prédéterminés comprenant au moins l'un parmi un nombre, un type, une direction de déplacement et une vitesse de déplacement de l'au moins un objet en fonction d'une distance entre le corps mobile et l'au moins un objet acquise par l'intermédiaire du capteur de distance et d'une image de l'au moins un objet acquise par l'intermédiaire d'un capteur d'image pour acquérir un deuxième résultat de détermination ; et
l'exécution d'une deuxième commande de déplacement du corps mobile sur la base du deuxième résultat de détermination,
dans lequel la valeur de seuil prédéterminée dépend de la distance entre le corps mobile et l'au moins un objet lorsque le premier résultat de détermination est acquis et d'une pré-estimation du temps nécessaire à l'acquisition du deuxième résultat de détermination.

2. Procédé selon la revendication 1, dans lequel,
à condition qu'une distance entre le corps mobile et l'au moins un objet soit inférieure ou égale à une première distance, il est déterminé que l'au moins un objet existe dans la direction d'avancée du corps mobile pour acquérir le premier résultat de détermination ; et
à condition que la distance entre le corps mobile et l'au moins un objet soit inférieure ou égale à une deuxième distance, les paramètres prédéterminés de l'au moins un objet sont déterminés pour acquérir le deuxième résultat de détermination,
dans lequel la première distance est plus longue que la deuxième distance.

3. Procédé selon la revendication 1 ou 2, dans lequel
un temps pour déterminer que l'au moins un objet existe dans la direction d'avancée du corps mobile pour acquérir le premier résultat de détermination est un premier temps ; et
un temps pour déterminer les paramètres prédéterminés de l'au moins un objet pour acquérir le deuxième résultat de détermination est un deuxième temps,
dans lequel le premier temps est plus court que le deuxième temps.

4. Procédé selon la revendication 1, dans lequel
la détermination que l'au moins un objet existe dans la direction d'avancée du corps mobile pour acquérir le premier résultat de détermination comprend : l'acquisition du premier résultat de détermination sur la base d'une mesure optique ou sur la base d'un premier modèle d'apprentissage automatique ; et
la détermination des paramètres prédéterminés de l'au moins un objet pour acquérir le deuxième résultat de détermination comprend :
l'acquisition de la distance entre le corps mobile et l'au moins un objet par l'intermédiaire du capteur de distance ;
l'acquisition d'une image de l'au moins un objet par l'intermédiaire du capteur d'image ;
l'entrée de l'image de l'au moins un objet et de la distance entre le corps mobile et l'au moins un objet dans un deuxième modèle d'apprentissage automatique ; et
l'acquisition du deuxième résultat de détermination sur la base du deuxième modèle d'apprentissage automatique.

5. Procédé selon la revendication 4, dans lequel l'acquisition du premier résultat de détermination sur la base d'une mesure optique comprend : l'acquisition de la distance entre le corps mobile et l'au moins un objet par l'intermédiaire du capteur de distance, et la détermination que l'au moins un objet existe dans la direction d'avancée du corps mobile sur la base de la distance qui est acquise par l'intermédiaire du capteur de distance.

6. Procédé selon la revendication 4, dans lequel
l'acquisition du deuxième résultat de détermination sur la base du deuxième modèle d'apprentissage automatique comprend en outre : le traitement de l'image pour acquérir au moins l'un parmi le nombre, le type, la direction de déplacement et la vitesse de déplacement de l'au moins un objet par l'intermédiaire du deuxième modèle d'apprentissage automatique.

7. Procédé selon la revendication 4 ou 5, dans lequel
l'acquisition du deuxième résultat de détermination sur la base du deuxième modèle d'apprentissage automatique comprend :
le traitement d'une partie de l'image et de la distance pour acquérir au moins l'un parmi le nombre, le type, la direction de déplacement et la vitesse de déplacement de l'au moins un objet par l'intermédiaire du deuxième modèle d'apprentissage automatique.

8. Procédé selon la revendication 1, dans lequel
le procédé comprend en outre : l'acquisition d'une vitesse du corps mobile.

9. Procédé selon la revendication 1, dans lequel
le procédé comprend en outre : l'acquisition d'une position de l'au moins un objet, et l'exécution d'une deuxième commande de déplacement du corps mobile en outre sur la base de la position.

10. Dispositif de commande de déplacement d'un corps mobile, comprenant :
une première unité de détermination (502) configurée pour déterminer qu'au moins un objet existe dans une direction d'avancée du corps mobile sur la base d'un capteur pour acquérir un premier résultat de détermination ;
une première unité de commande (504) configurée pour exécuter une commande de déplacement du corps mobile sur la base du premier résultat de détermination,
dans lequel la première unité de commande (504) est configurée pour commander une décélération du corps mobile lorsque l'au moins un objet existe dans une direction d'avancée du corps mobile et lorsqu'une vitesse du corps mobile ou une vitesse relative du corps mobile et de l'au moins un objet dépasse une valeur de seuil prédéterminée,
dans lequel la première unité de commande (504) est configurée pour maintenir la vitesse du corps mobile inchangée lorsque l'au moins un objet existe dans une direction d'avancée du corps mobile et lorsque la vitesse du corps mobile ou la vitesse relative du corps mobile et de l'au moins un objet ne dépasse pas la valeur de seuil prédéterminée ;
une deuxième unité de détermination (506) configurée pour déterminer des paramètres prédéterminés comprenant au moins l'un parmi un nombre, un type, une direction de déplacement et une vitesse de déplacement de l'au moins un objet en fonction d'une distance entre le corps mobile et l'au moins un objet acquise par l'intermédiaire du capteur de distance et d'une image de l'au moins un objet acquise par l'intermédiaire d'un capteur d'image pour acquérir un deuxième résultat de détermination ; et
une deuxième unité de commande (508) configurée pour exécuter une commande de déplacement du corps mobile sur la base du deuxième résultat de détermination,
dans lequel la valeur de seuil prédéterminée dépend de la distance entre le corps mobile et l'au moins un objet lorsque le premier résultat de détermination est acquis et d'une pré-estimation du temps nécessaire à l'acquisition du deuxième résultat de détermination.

11. Dispositif selon la revendication 10, dans lequel,
à condition qu'une distance entre le corps mobile et l'au moins un objet soit inférieure ou égale à une première distance, la première unité de détermination (502) détermine que l'au moins un objet existe dans la direction d'avancée du corps mobile pour acquérir le premier résultat de détermination ; et
à condition que la distance entre le corps mobile et l'au moins un objet soit inférieure ou égale à une deuxième distance, la deuxième unité de détermination (504) détermine les paramètres prédéterminés de l'au moins un objet pour acquérir le deuxième résultat de détermination,
dans lequel la première distance est plus longue que la deuxième distance.

12. Dispositif selon la revendication 10 ou 11, dans lequel
un temps nécessaire à la première unité de détermination (502) pour déterminer que l'au moins un objet existe dans la direction d'avancée du corps mobile pour acquérir le premier résultat de détermination est un premier temps ; et
un temps nécessaire à la deuxième unité de détermination (504) pour déterminer les paramètres prédéterminés de l'au moins un objet pour acquérir le deuxième résultat de détermination est un deuxième temps,
dans lequel le premier temps est plus court que le deuxième temps.

13. Dispositif selon la revendication 10, dans lequel
la première unité de détermination (502) est configurée pour acquérir le premier résultat de détermination sur la base d'une mesure optique ou sur la base d'un premier modèle d'apprentissage automatique ; et
la deuxième unité de détermination (504) est configurée pour acquérir la distance entre le corps mobile et l'au moins un objet par l'intermédiaire du capteur de distance, acquérir une image de l'au moins un objet par l'intermédiaire du capteur d'image, entrer l'image de l'au moins un objet et la distance entre le corps mobile et l'au moins un objet dans un deuxième modèle d'apprentissage automatique, et acquérir le deuxième résultat de détermination sur la base du deuxième modèle d'apprentissage automatique.

14. Dispositif selon la revendication 13, dans lequel
la première unité de détermination (502) est en outre configurée pour : acquérir la distance entre le corps mobile et l'au moins un objet par l'intermédiaire d'un capteur de distance, et déterminer que l'au moins un objet existe dans la direction d'avancée du corps mobile sur la base de la distance qui est acquise par l'intermédiaire du capteur de distance.

15. Dispositif selon la revendication 13, dans lequel
la deuxième unité de détermination (504) est en outre configurée pour : traiter l'image pour acquérir au moins l'un parmi le nombre, le type, la direction de déplacement et la vitesse de déplacement de l'au moins un objet par l'intermédiaire du deuxième modèle d'apprentissage automatique.

16. Dispositif selon la revendication 13 ou 14, dans lequel
la deuxième unité de détermination (504) est en outre configurée pour :
traiter une partie de l'image et la distance pour acquérir au moins l'un parmi le nombre, le type,
la direction de déplacement et la vitesse de déplacement de l'au moins un objet par l'intermédiaire du deuxième modèle d'apprentissage automatique.

17. Dispositif selon la revendication 10, dans lequel
le dispositif comprend en outre une unité d'acquisition, et l'unité d'acquisition est configurée pour acquérir une vitesse du corps mobile.

18. Dispositif selon la revendication 10, dans lequel
le dispositif comprend en outre une unité d'acquisition, l'unité d'acquisition est configurée pour acquérir une position de l'au moins un objet, et la deuxième unité de commande (508) est configurée pour exécuter une commande de déplacement du corps mobile en outre sur la base de la position.

19. Programme de commande de déplacement d'un corps mobile qui, lorsqu'il est exécuté, amène le procédé selon l'une quelconque des revendications 1 à 9 à être réalisé.

20. Support de stockage sur lequel est stocké un programme qui, lorsqu'il est exécuté, amène le procédé selon l'une quelconque des revendications 1 à 9 à être réalisé.
